# EUROPÄISCHE PATENTSCHRIFT

(11) **EP 2 845 073 B1**
(45) Veröffentlichungstag und Bekanntmachung des Hinweises auf die Patenterteilung: **01.06.2016**
(21) Anmeldenummer: 13717770.5
(22) Anmeldetag: 18.04.2013
(51) Int. Cl.: G06F 1/18

(54) **VERRIEGELUNGSPLATTE SOWIE EINE ANORDNUNG ZUM VERRIEGELN EINES GEHÄUSES EINES ELEKTRONISCHEN GERÄTS**
LOCKING PLATE AND ARRANGEMENT FOR LOCKING A HOUSING OF AN ELECTRONIC APPARATUS
PLAQUE DE VERROUILLAGE ET SYSTÈME DE VERROUILLAGE D'UN BOÎTIER D'APPAREIL ÉLECTRONIQUE

(30) Priorität: 30.04.2012 DE 102012103791
(43) Veröffentlichungstag der Anmeldung: 11.03.2015
(73) Patentinhaber: Fujitsu Technology Solutions Intellectual Property GmbH, 80807 München (DE)
(72) Erfinder: NEUKAM, Wilhelm, 86399 Bobingen (DE)
(74) Vertreter: Epping - Hermann - Fischer
(86) Internationale Anmeldenummer: PCT/EP2013/058086
(87) Internationale Veröffentlichungsnummer: WO 2013/164196

(56) Entgegenhaltungen:
- EP-A2- 0 425 184
- US-A- 6 075 693
- US-A1- 2007 217 137

## Beschreibung

Verriegelungsplatte sowie eine Anordnung zum Verriegeln eines Gehäuses eines elektronischen Geräts

Die Erfindung betrifft eine Verriegelungsplatte sowie eine Anordnung zum Verriegeln eines Gehäuses eines elektronischen Geräts, wobei das Gehäuse zumindest einen Deckel und einen Öffnungshebel aufweist, der von einer Zu-Stellung in eine Offen-Stellung betätigt werden kann, um die Öffnung des Gehäuses mittels Bewegung des Deckels zu ermöglichen, wobei die Verriegelungsplatte zumindest eine Lasche aufweist, die ungefähr senkrecht zur Verriegelungsplatte ist. Eine derartige Vorrichtung ist aus der EP 0425184 A2 bekannt.

Gehäuse für elektronische Geräte oder Computer können so gestaltet werden, dass sie auf einfache Art und Weise (zum Beispiel schraubenlos) auch von Kunden geöffnet werden können. Solche Gehäuse haben häufigerweise zwei Kunststoffdeckel, nämlich einen oberen Deckel und einen unteren Deckel. Die Verriegelung der Deckel erfolgt in der Regel über einen im Deckel integrierten Schnapphaken.

Ein Vorteil dieser Art von Gehäuse ist eine schnelle Erreichbarkeit der darin enthaltenen Komponenten. Das heißt, dass Vorgänge wie die Erweiterung von Speicher oder das Tauschen einer Festplatte schneller und einfacher stattfinden können. Der Nachteil ist, dass die Komponenten auch sehr leicht unbefugt entnommen werden können.

Daher ist es die Aufgabe der Erfindung, eine Lösung zu beschreiben, welche die unbefugte Öffnung des Gehäuses verhindern kann.

Diese Aufgabe wird dadurch gelöst, dass die Lasche den Öffnungshebel in der Zu-Stellung fixieren kann, wenn die Verriegelungsplatte auf das Gehäuse montiert ist.

Diese Aufgabe wird ebenso durch eine Anordnung nach Patentanspruch 4 gelöst.

Die Verriegelungsplatte wird so aufgesetzt, dass die Laschen den Schließmechanismus des Deckels, zum Beispiel die Schnapphaken, so festhalten, dass der Schließmechanismus immer fest am Gehäuse angeschlossen ist, auch wenn von außen am Deckel gezogen werden sollte. Wenn Schnapphaken verwendet werden, bleiben sie fest im Gehäuse eingerastet. Zusätzlich wird der Zugriff zum Öffnungshebel durch die Laschen abgedeckt. Die Verriegelungsplatte kann mit einer Schraube und/oder mit einem Schloss am Gehäuse befestigt werden. Sicherer und schneller zum Auf- und Zumachen des Gehäuses ist die Anwendung eines Schlosses mit einem Schlüssel.

Vorteilhafte Ausgestaltungen der Erfindung sind nachfolgend anhand der schematischen Zeichnungen näher erläutert.

In den Zeichnungen zeigen:
- Figur 1: eine Explosionsansicht eines Gehäuses mit einer Verriegelungsplatte, einer Schraube und einem Schloss zur Befestigung und
- Figur 2: einen schematischen Querschnitt eines Gehäuses und einer Verriegelungsplatte unmittelbar vor der Montage.

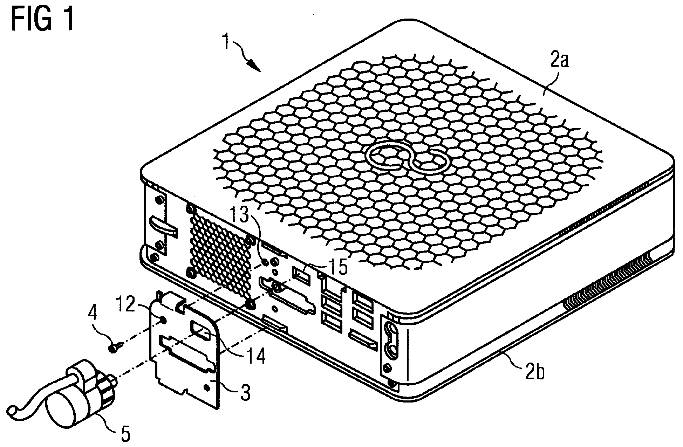

Figur 1 zeigt ein Gehäuse 1, das zwei Kunststoffdeckel, nämlich einen oberen Deckel 2a und einen unteren Deckel 2b, aufweist, eine Verriegelungsplatte 3, eine Schraube 4 und ein Schloss 5.

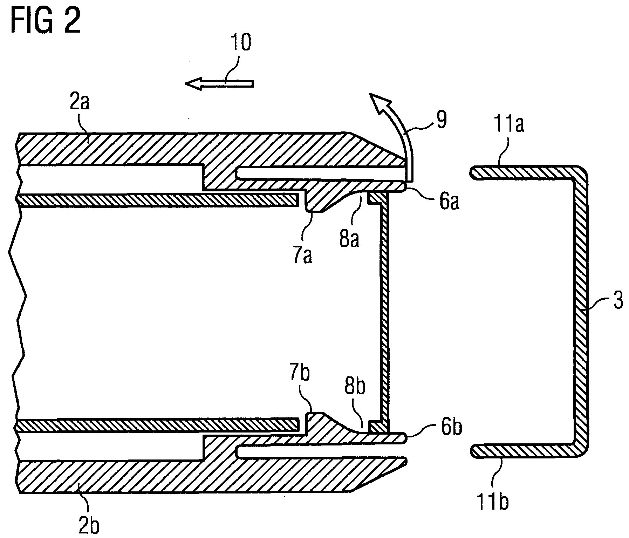

Der obere Deckel 2a weist einen ersten Öffnungshebel 6a und der untere Deckel 2b einen zweiten Öffnungshebel 6b auf. Beide Öffnungshebel 6a ,6b sind in der Figur 2 in der Zu-Stellung dargestellt. Der erste Öffnungshebel 6a weist einen ersten Schnapphaken 7a auf, der in Figur 2 in einer ersten Öffnung 8a des Gehäuses 1 eingerastet ist.

Zum Abnehmen des oberen Deckels 2a wird der erste Öffnungshebel 6a in Richtung des ersten Pfeils 9 bewegt, um den ersten Schnapphaken 7a von der ersten Öffnung 8a im Gehäuse 1 zu befreien. Der obere Deckel 2a wird anschließend in Richtung des zweiten Pfeils 10 geschoben, um das Gehäuse 1 zu öffnen.

Das Gleiche gilt analog für den unteren Deckel 2b, der mittels des zweiten Öffnungshebels 6b und eines zweiten Schnapphakens 7b in einer zweiten Öffnung 8b am Gehäuse 1 montiert ist.

Die Verriegelungsplatte 3 ist klammerartig ausgebildet und weist zwei Laschen 11a, 11b auf. Eine erste Lasche 11a wird in die Lücke zwischen dem ersten Öffnungshebel 6a und dem ersten Deckel 2a eingesetzt beziehungsweise in Richtung des zweiten Pfeils 10 eingeschoben (siehe Figur 2). Gleichzeitig wird auch in Richtung des zweiten Pfeils 10 eine zweite Lasche 11b in die Lücke zwischen dem zweiten Öffnungshebel 6b und dem zweiten Deckel 2b eingesetzt beziehungsweise eingeschoben. In diesem Zustand kann sich der Öffnungshebel 6a, 6b nicht mehr bewegen. Der erste Öffnungshebel 6a kann zum Beispiel nicht mehr in Richtung des ersten Pfeils 9 bewegt werden. Beide Öffnungshebel 6a, 6b sind in der Zu-Stellung gesperrt und beide Deckel 2a, 2b sind somit zugeschlossen.

Die Verriegelungsplatte 3 kann mit der Schraube 4 durch eine Schrauben-Öffnung 12 in der Verriegelungsplatte und in einer entsprechenden Schrauben-Ausnehmung 13 im Gehäuse 1 befestigt werden. Alternativ oder zusätzlich kann ein Schloss 5 (hier zum Beispiel ein Kensington-Schloss) die Verriegelungsplatte 3 am Gehäuse 1 sichern und befestigen, da ein Schlüssel zum Entsperren benötigt wird. Die Verriegelungsplatte 3 weist eine entsprechende Schloss-Öffnung 14 auf, durch die die Kupplung des Kensington-Schlosses 5 durchgeführt werden kann und in eine entsprechende Schloss-Ausnehmung 15 im Gehäuse 1 hineingesteckt und abgesperrt werden kann.

### Bezugszeichenliste

- 1: Gehäuse
- 2a: Oberer Deckel
- 2b: unterer Deckel
- 3: Verriegelungsplatte
- 4: Schraube
- 5: Schloss
- 6a: Erster Öffnungshebel
- 6b: Zweite Öffnungshebel
- 7a: Erster Schnapphaken
- 7b: Zweiter Schnapphaken
- 8a: Erster Öffnung im Gehäuse
- 8b: Zweite Öffnung im Gehäuse
- 9: Erster Pfeil
- 10: Zweiter Pfeil
- 11a: Erste Lasche
- 11b: Zweite Lasche
- 12: Schrauben-Öffnung
- 13: Schrauben-Ausnehmung
- 14: Schloss-Öffnung
- 15: Schloss-Ausnehmung

## Patentansprüche

1. Verriegelungsplatte (3) zum Verriegeln eines Gehäuses (1) eines elektronischen Geräts, wobei das Gehäuse (1) zumindest einen Deckel (2a, 2b) und einen Öffnungshebel (6a, 6b) aufweist, der von einer Zu-Stellung in eine Offen-Stellung betätigt werden kann, um die Öffnung des Gehäuses (1) mittels Bewegung des Deckels (2a, 2b) zu ermöglichen, wobei
die Verriegelungsplatte (3) zumindest eine Lasche (11a, 11b aufweist, die ungefähr senkrecht zur Verriegelungsplatte (3) angeordnet ist, **dadurch gekennzeichnet dass** die Lasche (11a, 11b) den Öffnungshebel (6a, 6b) in der Zu-Stellung fixieren kann, wenn die Verriegelungsplatte (3) an dem Gehäuse (1) montiert ist.

2. Verriegelungsplatte (3) nach Anspruch 1,
**dadurch gekennzeichnet, dass**
die Verriegelungsplatte (3) zwei Laschen (11a, 11b) aufweist und als eckige Klammer ausgebildet ist.

3. Verriegelungsplatte (3) nach Anspruch 1 oder 2,
**dadurch gekennzeichnet, dass**
die Verriegelungsplatte (3) zumindest eine Öffnung (12, 14) aufweist, durch die ein Befestigungsmittel (4, 5) geführt werden kann, um die Verriegelungsplatte (3) an dem Gehäuse (1) mittels entsprechender Ausnehmungen (13, 15) im Gehäuse (1) zu befestigen.

4. Anordnung zur Verriegelung eines Gehäuses (1), die
- eine Verriegelungsplatte (3) nach einem der vorherigen Ansprüche,
- ein Gehäuse (1), das zumindest einen Deckel (2a, 2b) und einen Öffnungshebel (6a, 6b) aufweist, der von einer Zu-Stellung in eine Offen-Stellung betätigt werden kann, um das Gehäuse (1) mittels Bewegung des Deckels (2a, 2b) zu öffnen, und
- ein Befestigungsmittel (4, 5) aufweist, um die Verriegelungsplatte (3) an dem Gehäuse (1) anzuschließen,
wobei die Lasche (11a, 11b) so angrenzend an dem Öffnungshebel (6a, 6b) in der Zu-Stellung angeordnet ist, dass der Öffnungshebel (6a, 6b) fixiert ist.

5. Anordnung nach Anspruch 4,
**dadurch gekennzeichnet, dass**
das Gehäuse (1) zumindest eine entsprechende Ausnehmung (13, 15) aufweist, die zum Aufnehmen des Befestigungsmittels (4, 5) beim Anschließen der Verriegelungsplatte (3) an dem Gehäuse (1) dient.

6. Anordnung nach Anspruch 4 oder 5,
**dadurch gekennzeichnet, dass**
das Befestigungsmittel als Schraube (4) und/oder als Schloss (5) ausgebildet ist.

7. Anordnung nach Anspruch 6,
**dadurch gekennzeichnet, dass**
das Befestigungsmittel als Kensington-Schloss ausgebildet ist.

8. Anordnung nach einem der Ansprüche 4 bis 7,
**dadurch gekennzeichnet, dass**
die Verriegelungsplatte (3) zwei Laschen (11a, 11b) aufweist und das Gehäuse (1) einen oberen Deckel (2a), einen unteren Deckel (2b), einen ersten und einen zweiten Öffnungshebel (6a, 6b) aufweist, wobei der erste Öffnungshebel (6a) den oberen Deckel (2a) öffnen und schließen kann und der zweite Öffnungshebel (6b) den unteren Deckel (2b) öffnen und schließen kann, wobei die Laschen (11a, 11b) so angeordnet sind, dass jede Lasche (11a, 11b) einen Öffnungshebel (6a, 6b) in der Zu-Stellung fixiert.

## Claims

1. Locking plate (3) for locking a housing (1) of an electronic device, wherein the housing (1) has at least one cover (2a, 2b) and one opening lever (6a, 6b) which can be operated to move from a closed position to an open position in order to allow the housing (1) to be opened by means of movement of the cover (2a, 2b), wherein
the locking plate (3) has at least one lug (11a, 11b) which is arranged approximately perpendicular to the locking plate (3), **characterized in that** the lug (11a, 11b) can fix the opening lever (6a, 6b) in the closed position when the locking plate (3) is fitted to the housing (1).

2. Locking plate (3) according to Claim 1,
**characterized in that**
the locking plate (3) has two lugs (11a, 11b) and is in the form of a square bracket.

3. Locking plate (3) according to Claim 1 or 2,
**characterized in that**
the locking plate (3) has at least one opening (12, 14) through which a fastening means (4, 5) can be guided in order to fasten the locking plate (3) to the housing (1) by means of corresponding recesses (13, 15) in the housing (1).

4. Arrangement for locking a housing (1) which has
- a locking plate (3) according to one of the preceding claims,
- a housing (1) which has at least one cover (2a, 2b) and one opening lever (6a, 6b) which can be operated to move from a closed position to an open position in order to open the housing (1) by means of moving the cover (2a, 2b), and
- a fastening means (4, 5) in order to connect the locking plate (3) to the housing (1),
wherein the lug (11a, 11b) is arranged in a manner adjoining the opening lever (6a, 6b) in the closed position such that the opening lever (6a, 6b) is fixed.

5. Arrangement according to Claim 4,
**characterized in that**
the housing (1) has at least one corresponding recess (13, 15) which serves to receive the fastening means (4, 5) when the locking plate (3) is connected to the housing (1).

6. Arrangement according to Claim 4 or 5,
**characterized in that**
the fastening means is in the form of a screw (4) and/or in the form of a lock (5).

7. Arrangement according to Claim 6,
**characterized in that**
the fastening means is in the form of a Kensington lock.

8. Arrangement according to one of Claims 4 to 7,
**characterized in that**
the locking plate (3) has two lugs (11a, 11b), and the housing (1) has an upper cover (2a), a lower cover (2b), a first and a second opening lever (6a, 6b), wherein the first opening lever (6a) can open and close the upper cover (2a), and the second opening lever (6b) can open and close the lower cover (2b), wherein the lugs (11a, 11b) are arranged such that each lug (11a, 11b) fixes an opening lever (6a, 6b) in the closed position.

## Revendications

1. Plaque de verrouillage (3) pour le verrouillage d'un boîtier (1) d'un appareil électronique, dans lequel le boîtier (1) comporte au moins un couvercle (2a, 2b) et un levier d'ouverture (6a, 6b) qui peut être manoeuvré d'une position de fermeture à une position d'ouverture afin de pouvoir ouvrir le boîtier (1) en déplaçant le couvercle (2a, 2b), dans lequel
la plaque de verrouillage (3) comporte au moins une patte (11a, 11b) qui est disposée de manière approximativement perpendiculaire à la plaque de verrouillage (3), **caractérisée en ce que** la patte (11a, 11b) peut immobiliser le levier d'ouverture (6a, 6b) à la position de fermeture lorsque la plaque de verrouillage (3) est montée sur le boîtier (1).

2. Plaque de verrouillage (3) selon la revendication 1, **caractérisée en ce que** la plaque de verrouillage (3) comporte deux pattes (11a, 11b) et est réalisée sous la forme d'agrafes rectangulaires.

3. Plaque de verrouillage (3) selon la revendication 1 ou 2,
**caractérisée en ce que** la plaque de verrouillage (3) comporte au moins une ouverture (12, 14) à travers laquelle un moyen de fixation (4, 5) peut être guidé afin de fixer la plaque de verrouillage (3) sur le boîtier (1) au moyen d'évidements correspondants (13, 15) dans le boîtier (1).

4. Dispositif destiné à verrouiller un boîtier (1), qui comporte
- une plaque de verrouillage (3) selon l'une quelconque des revendications précédentes,
- un boîtier (1) qui comporte au moins un couvercle (2a, 2b) et un levier d'ouverture (6a, 6b) pouvant être manoeuvré d'une position fermée à une position ouverte afin d'ouvrir le boîtier (1) en déplaçant le couvercle (2a, 2b), et
un moyen de fixation (4, 5) pour relier la plaque de verrouillage (3) au boîtier (1),
dans lequel la patte (11a, 11b) est disposée de manière adjacente au levier d'ouverture (6a, 6b) à la position de fermeture de manière à fixer le levier d'ouverture (6a, 6b).

5. Dispositif selon la revendication 4,
**caractérisé en ce que** le boîtier (1) comporte au moins un évidement correspondant (13, 15) qui sert à recevoir le moyen de fixation (4, 5) lors du montage de la plaque de verrouillage (3) sur le boîtier (1).

6. Dispositif selon la revendication 4 ou 5,
**caractérisé en ce que** le moyen de fixation est réalisé sous forme de vis (4) et/ou de verrou (5).

7. Dispositif selon la revendication 6,
**caractérisé en ce que** le moyen de fixation est réalisé sous la forme d'un verrou Kensington.

8. Dispositif selon l'une quelconque des revendications 4 à 7,
**caractérisé en ce que** la plaque de verrouillage (3) comporte deux pattes (11a, 11b) et **en ce que** le boîtier (1) comporte un couvercle supérieur (2a), un couvercle inférieur (2b), des premier et second leviers d'ouverture (6a, 6b), dans lequel le premier levier d'ouverture (6a) peut ouvrir et fermer le couvercle supérieur (2a) et le second levier d'ouverture (6b) peut ouvrir et fermer le couvercle inférieur (2b), dans lequel les pattes (11a, 11b) sont disposées de manière à ce que chaque patte (11a, 11b) fixe un levier d'ouverture (6a, 6b) en position de fermeture.
